# EUROPEAN PATENT APPLICATION

(11) **EP 1 370 026 A1**
(43) Date of publication of application: **10.12.2003**
(21) Application number: 03253357.2
(22) Date of filing: 29.05.2003
(51) Int. Cl.: H04L 12/24

(54) **Automatic and dynamic reconfiguration of a network based on rules retrieved upon receiving a stimulus**

(30) Priority: 07.06.2002 US 165719
(71) Applicant: Avaya Technology Corp., Basking Ridge, NJ 07920 (US)
(72) Inventor: Krumm-Heller, Alexander Michael, Chatswood NSW 2067 (AU); Laveau, Stephane, Glebe, NSW 2037 (AU); Minhazuddin, Muneyb, Quakers Hill, NSW 2763 (AU)
(74) Representative: Williams, David John

(57) **Abstract**

An apparatus and method that allow the automatic reconfiguration of a switching network to occur when determined conditions occur.
The network is reconfigured according to rules retrieved upon receiving a stimulus.

## Description

### Technical Field

This invention relates to switching networks, and in particular, to the reconfiguration of switching networks.

### Background of the Invention

Within the prior art, it is known for large corporations or other entities to have networks that have hundreds of routers for the transmission of packets of data. A problem occurs when such a large network has to be reconfigured or as it is often referred to the network is provisioned. A network administrator must perform the task of the reconfiguration by sending individual commands to each of the routers within the network that requires change. This is a labor intense effort to perform the reconfiguration of a large packet switching network. The result is that large packet switching networks are not adaptable to changing situations because of the time and labor required to change large packet switching networks. For example, in packet switching networks, it is well known for traffic to change during the course of the day either by the type of traffic or the concentration of traffic being switched between different destinations. The concept that the traffic concentration will change can be easily envisioned when it is realized that a large company's packet switching network spans the globe. In addition, during certain times of the day backup operations are performed that require large amounts of data to be transferred between various machines so that the data files can be preserved. Unfortunately, using prior art methods the configuration of a large packet switching network is only modified when routers are added or subtracted from the network or when serious problems occur that require manual intervention.

### Summary of the Invention

The aforementioned problems are solved and a technical advance is achieved in the art by an apparatus and method that allow the automatic reconfiguration of a switching network to occur when determined conditions occur.

### Brief Description of the Drawing

FIG. 1 illustrates a switching network for implementing one embodiment of the invention;
FIGS. 2 and 6 illustrate, in flowchart form, operations performed by an embodiment of the invention; and
FIGS. 3 - 5 illustrate tables used by an embodiment of the invention.

### Detailed Description

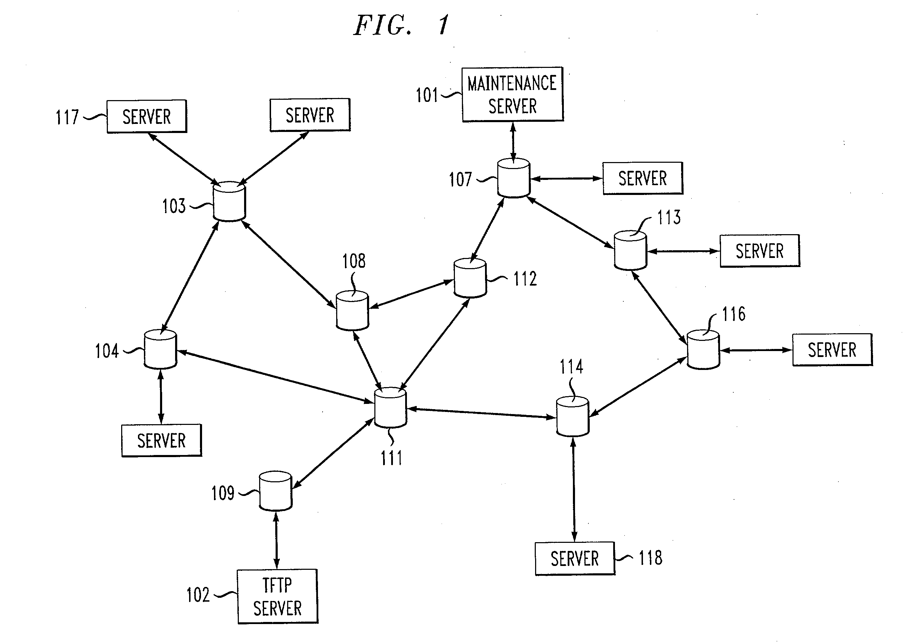

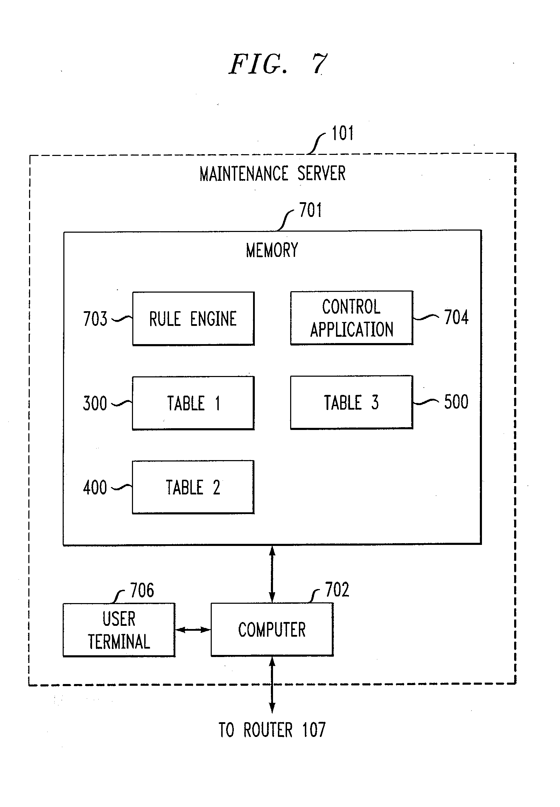

FIG. 1 illustrates a switching network for implementing an embodiment of the invention. Routers 103-116 interconnect a plurality of endpoints such as servers 117 and 118. Maintenance server 101 is constantly evaluating rules utilizing rule engine 703 of FIG. 7 to determine if it is appropriate to reconfigure the switching network illustrated in FIG. 1 to resolve for example any traffic congestion problems, to anticipate the flow of traffic between different endpoints based on the time of day, or an administrator determined event has occurred.

Maintenance server 101 utilizing rule engine 703 of FIG. 7 determines whether a traffic problem has arisen within the network defined by routers 103-116 that requires reconfiguration. In addition, based on the time of the day, rule engine 703 of FIG. 7 may determine that the network should also be reconfigured to take into account such operations as data backups or if during normal business hours the need to provide special treatment for voice traffic being carried by packets through the network. In addition, maintenance server 101 stores within the tables of FIG. 7 various configurations of the network implemented by routers 103-116 that can be put in place upon requests by an administrator of the network. One example of such an operation would be for events that are random in nature and where it is necessary to provide increased data switching between specified endpoints.

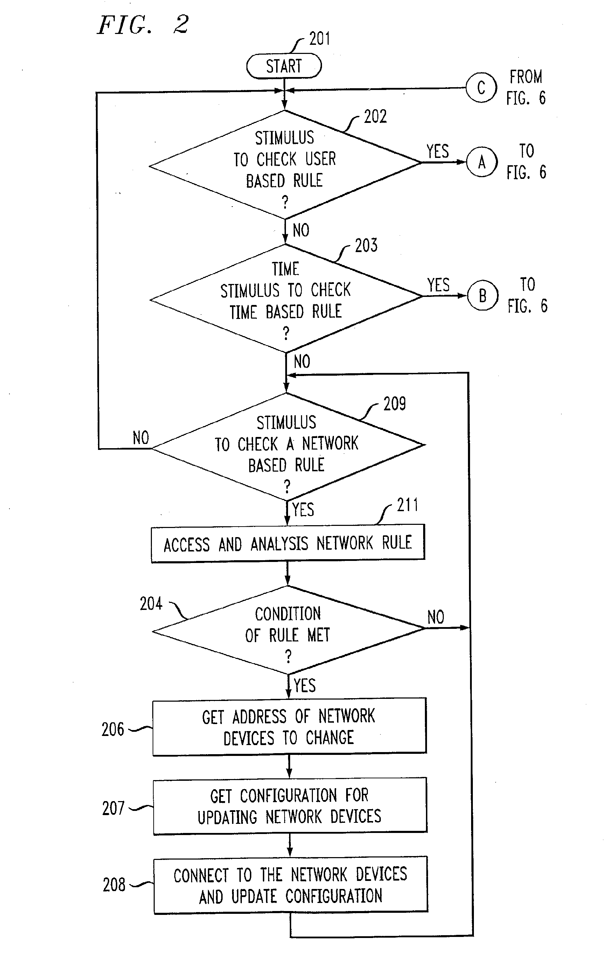

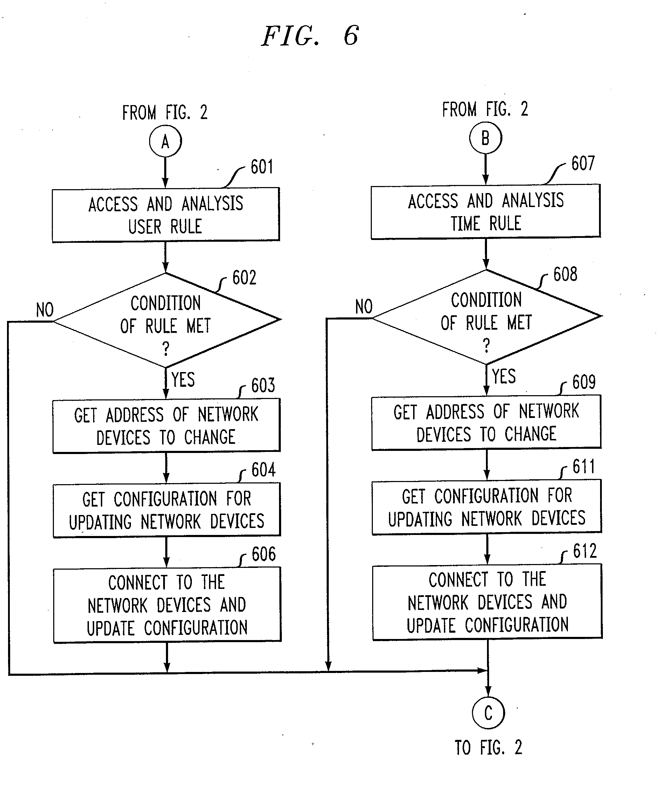

FIGS. 2 and 6 illustrate, in flowchart form, operations performed by an embodiment of the invention. In this regard, each block may represent a module, segment, or portion of code, which comprises one or more executable instructions for implementing the specified logical function(s). It should also be noted that in some alternative implementations, the functions noted in the blocks may occur out of the order noted in FIGS. 2 and 6 or may include additional functions without departing significantly from the functionality of an embodiment of the invention. For example, two blocks shown in succession in FIGS. 2 and 6 may in fact be executed substantially concurrently, the blocks may sometimes be executed in the reverse order, or some of the blocks may not be executed in all instances, depending upon the functionality involved, as will be further clarified below. All such modifications and variations are intended to be included herein within the scope of this disclosure and to be protected by the accompanying claims.

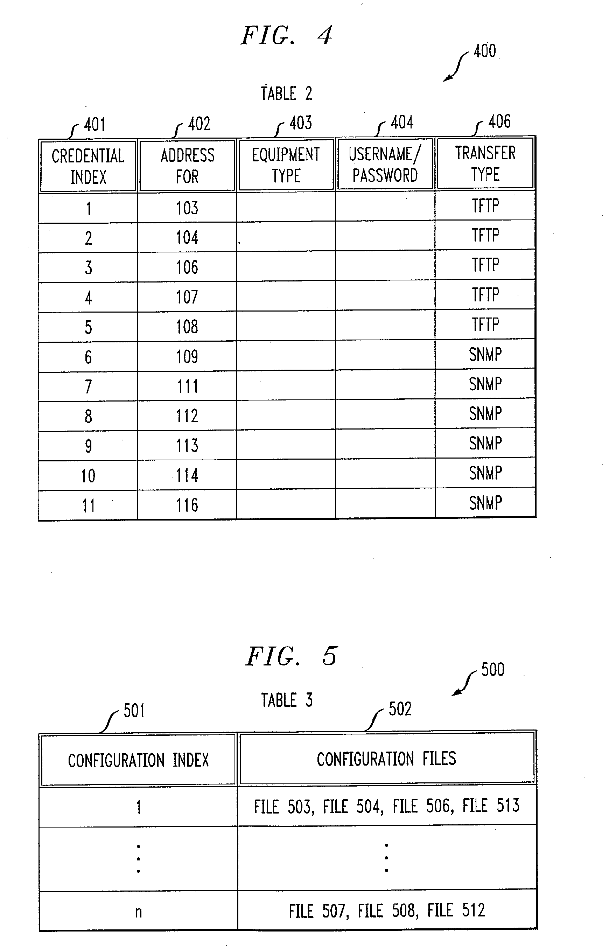

FIG. 2 illustrates, in flowchart form, operations performed by an embodiment of the invention. Once started from block 201, decision block 202 checks to see if a stimulus has arrived that requires the checking of a user based rule. If the answer is no control is transferred to decision block 203. The latter decision block determines if a time stimulus requires the checking of a time based rule. If the answer in decision block 203 is no, decision block 209 determines if a stimulus has arrived that requires the checking of a network based rule. If the answer is no, control is transferred back to decision block 202. If the answer in decision block 209 is yes, block 211 accesses and analyzes the network rule before transferring control to decision block 204. Decision block 204 then determines if the conditions designated by the rule have been met. If the answer is no, control is transferred back to block 202 to obtain a new rule. If the answer is yes, control is transferred to block 206 that obtains the addresses of network devices that must be reconfigured from Table 2 of FIG. 4. Table 2 not only provides an address of a network device but also the equipment type and the information needed to gain access to the network device. Note, that the addresses of the network devices are determined by using the credential index column 302 of Table 1.

Once the information is obtained from Table 2, block 207 then obtains the new configuration information by indexing into Table 3 of FIG. 5 utilizing the configuration index information defined for the rule that was met in decision block 204. Finally, block 208 causes the maintenance server 101 that is executing rule engine 703 of FIG. 7 as illustrated in FIG. 2 to log into the network devices/routers and to update the configurations of these routers as defined by Table 3. After execution of block 208, control is transferred back to decision block 209.

The configuration information is transferred to routers 103-116 by maintenance server 101 establishing a telnet session with the router and transferring the configuration information via the telnet session or by use of simple network management protocol (SNMP) messages that are utilized to transmit to the device/router the address of TFTP server 102 and to designate a configuration file that the router should obtain from TFTP server 102 using the TFTP protocol. Whether the telenet session is utilized or access to TFTP server 102 is utilized to transfer the configuration file defined by Table 3 to the router depends on whether the router can operate with a TFTP server or requires a telenet session to be established. One skilled in the art would readily realize that other types of data transfer mechanisms exist for transferring the configuration information to the routers.

Returning to decision block 202, if the stimulus does require the checking of a user based rule, control is transferred to block 601 of FIG. 6. Block 601 accesses and analyzes the user rule that caused the stimulus. Decision block 602 determines if the condition of the rule is met. If the answer is no, control is transferred back to decision block 202 of FIG. 2. If the answer in decision block 602 is yes, block 603 gets the address of the network devices to be reconfigured from Table 2 of FIG. 4. Once the information is obtained from Table 2, block 604 obtains the new configuration information by indexing into Table 3 of FIG. 5 utilizing the configuration index information defined for the rule that was met in decision block 602. Finally, block 606 causes maintenance server 101 that is executing rule engine 703 of FIG. 7 as illustrated in FIG. 2 to access the network devices/routers and to update the configurations of these routers as defined by Table 3 before returning control back to decision block 202 of FIG. 2.

Returning to decision block 203, if the answer is yes, control is transferred to block 607 of FIG. 6. Block 607 access and analyses the time rule before transferring control to decision block 608. Decision block 608 determines if the conditions of the rule are met. If the answer is no, control is transferred to decision block 202 of FIG. 2. If the answer in decision block 608 is yes, the addresses of the network devices to be changed are obtained in block 609 by accessing Table 2 of FIG. 4. Block 611 obtains new configuration information by indexing into Table 3 of FIG. 5 utilizing the configuration index information defined for the rule that was met in decision block 608. Block 612 causes maintenance server 101 that is executing rule engine 703 of FIG. 7 as illustrated in FIG. 2 to access the network devices/routers and to update the configurations of these routers as defined by Table 3 before returning control back to decision block 202 of FIG. 2.

Referring now to Table 1 that illustrates rules that are implemented by rule engine 703 of FIG. 7 being executed by maintenance server 101 of FIG. 1. Lines 304 through 305 illustrate rules that would be triggered by the time of day or time of week or month. Once triggered, the pointers to Table 2 that are listed in column 302 are utilized to index into Table 2 to obtain the address, equipment type, access information, and type of transfer for each network router that is to be modified. Configuration index column 303 then provides pointers for the invoked rule into Table 3 of FIG. 5 that defines the new configuration for each of the network routers specified in credential index column 302 which points to Table 2 of FIG. 4. Note, that the manner in which maintenance server 101 transfers the information of Table 3 of FIG. 5 to each individual router is determined by the transfer type column 406 of Table 2. In addition, the information in user name/password column 404 is utilized to give access into the network router.

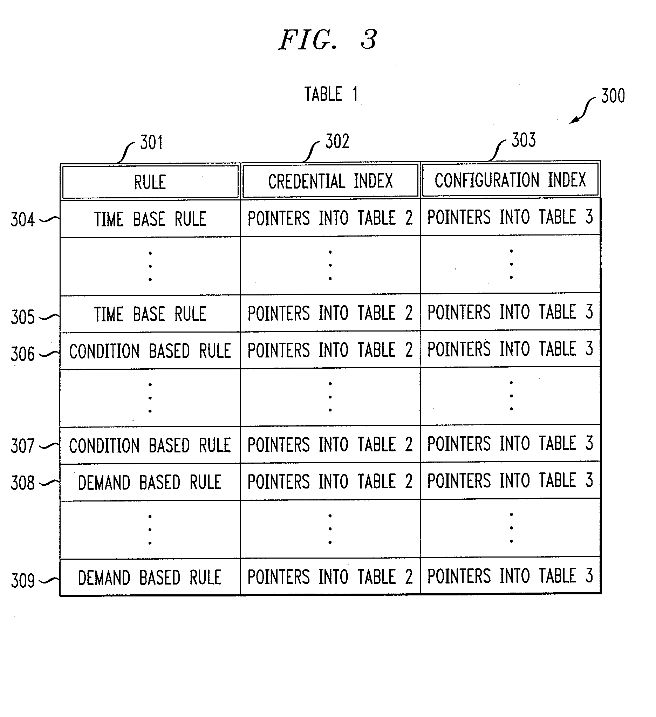

Rules 306 through 307 of Table 1 of FIG. 3 are illustrative examples of rules that are based on network conditions. For example, rule 306 may specify that maintenance server 101 interrogate routers 103, 106, 108, 112, and 111 to determine if the traffic load on these routers was too high. Maintenance server 101 performs this operation by utilizing SNMP messages to interrogate the Management Information Base (MIB) of each of these network routers. If any of these routers is found to be overloaded which would be indicated by the router discarding incoming packets, rule engine 703 of FIG. 7 of maintenance server 101 would access Table 3 of FIG. 5 utilizing the pointer for the network router experiencing network problems by utilizing a pointer from configuration index column 303 into Table 3 as defined for the particular network router by the rule 306 of Table 1 of FIG. 3. Depending on the number of network routers experiencing network problems, more than one router may have its configuration changed. In addition, the configuration table stored in Table 3 of FIG. 5 would specify, in the case where a router was being overrun with packets, that changes be made to upstream network routers so that they would divert data traffic away from the network router experiencing network problems. Such diversion techniques are well known by those skilled in the art and involve the control of the queuing within the upstream network router. In addition to determining network traffic overrun problems, a conditioned based rule such as rule 306 or 307 could also periodically test different elements of the network to determine if one of these elements had failed.

Rules 308-309 of Table 1 of FIG. 3 are rules that accept inputs from the network administrator to maintenance server 101 utilizing well known input and output facilities. When such an input is received from a network administrator, rule engine 703 of FIG. 7 of maintenance server 101 is responsive to this input to examine the demand based rules 308-309. The credential index column 302 and configuration index column 303 are utilized in a manner similar to the time based rules for the demand based rules. It is only the event that triggers the rule that is different between a time based rule and a demand based rule.

FIG. 7 illustrates, in block diagram, an embodiment of maintenance server 101. Computer 702 performs the operations illustrated in FIGS. 2 and 6 by executing control application 704 and rule engine 703 using information from tables 300, 400, and 500. User terminal 706 may used by the administrator of the network to request network configurations.

Maintenance server 101 can be implemented in software, hardware, or a combination thereof. In the currently contemplated best mode, the operations of maintenance server 101 of FIGS. 1 and 7 are implemented in software, as an executable program, and are executed by computer 702. Computer 702 is a hardware device for executing software, particularly that stored in memory 701. Computer 702 can be any custom made or commercially available computer.

The memory 701 can include any one or combination of volatile memory elements (*e.g.*, random access memory (RAM, such as DRAM, SRAM, SDRAM, etc.) and nonvolatile memory elements (e.g., ROM, hard drive, tape, CDROM, etc.). Moreover, the memory 701 may incorporate electronic, magnetic, optical, and/or other types of storage media. Note that the memory 701 can have a distributed architecture, where various components are situated remote from one another, but can be accessed by computer 702.

When the operations of maintenance server 101 are implemented in software, as is shown in FIG. 7, it should be noted that the operational information of maintenance server 101 is stored in memory 701. Memory 701 can be any computer-readable medium for use by or in connection with any computer related system or method. In the context of this document, a computer-readable medium is an electronic, magnetic, optical, or other physical device or means that can contain or store a computer program for use by or in connection with a computer related system or method. The operations of maintenance server 101 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via, for instance, optical scanning of the paper or other medium, then compiled, interpreted or otherwise processed in a suitable manner if necessary, and then stored in a computer memory.

In an alternative embodiment, where maintenance server 101 is implemented in hardware, maintenance server 101 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

## Claims

1. A method for dynamically reconfiguring a network having a plurality of switch elements (103-116), comprising the steps of:
**CHARACTERIZED IN THAT**
receiving (202, 203, 209) a stimulus to check rules for network configuration;
interrogating (211, 204, 601, 602, 607, 608) the rules to identify one of the rules to be implemented; and
executing (206-208, 603-606, 609-611) the identified one of the rules to reconfigure the network.

2. The method of claim 1 wherein a first set of the rules are network based rules and the step of interrogating comprises the steps of checking (211) each of the first set of the rules to determine if network conditions specified by the each of the first set of the rules is present; and
identifying (204) the each of the first set of the rules whose specified network conditions are meant as the identified one of the rules.

3. The method of claim 1 wherein a second set of the rules are time based rules and the step of interrogating comprises the steps of checking (607) each of the second set of the rules to determine if time conditions specified by the each of the second set of the rules are present; and
identifying (608) the each of the second set of the rules whose specified time conditions are meant as the identified one of the rules.

4. The method of claim 1 wherein a third set of the rules are rules based on user stimulus and the step of interrogating comprises the steps of checking (601) each of the third set of the rules to determine if user stimulus specified by the each of the third set of the rules is present; and
identifying (602) the each of the third set of the rules whose specified user stimulus has been received as the identified one of the rules.

5. The method of claims 2, 3 and 4 wherein the step of executing comprises the steps of accessing (204, 602, 608) one of a plurality of network configurations specified by the identified one of the rules to obtain configuration information; and
identifying (206, 603, 609) a subset of the plurality of switch elements that are to be modified.

6. The method of claim 5 wherein the step of executing further comprises the step of transmitting (207, 208, 604, 606, 611, 612) the configuration information to the identified subset of the plurality of switch elements to reconfigure the network.

7. The method of claim 6 wherein the step of transmitting comprises the steps of connecting (208, 606, 612) to each of the subset of the plurality of switch elements; and
updating (208, 606, 612) the configuration of each of the subset of plurality of switch elements.

8. The method of claim 7 wherein the step of receiving the stimulus comprises the step of interrogating (202, 203, 209) the plurality of switch elements for the stimulus.

9. An apparatus for dynamically reconfiguring a network having a plurality of switch elements (103-116), comprising:
means (703) for accessing a first table (300) with a stimulus;
**CHARACTERIZED IN THAT**
means (703) for determining from the first table one of a plurality of rules that matches the stimulus;
means for using first information from the first table to identify reconfiguration information in a second table (500); and
means (703) for reconfiguring the network using the reconfiguration information.

10. The apparatus of claim 9 wherein the means for reconfiguring comprises means for using second information from the first table to identify a subset of the plurality of switch elements; and
means for transmitting the reconfiguration information to the subset of the plurality of switch elements.

11. The apparatus of claim 10 wherein the stimulus is a network condition.

12. The apparatus of claim 10 wherein the stimulus is a time condition.

13. The apparatus of claim 10 wherein the stimulus is a user input.
